# EUROPÄISCHE PATENTSCHRIFT

(11) **EP 4 058 682 B1**
(45) Veröffentlichungstag und Bekanntmachung des Hinweises auf die Patenterteilung: **24.04.2024**
(21) Anmeldenummer: 20803822.4
(22) Anmeldetag: 09.11.2020
(51) Int. Cl.: F16D 43/208

(54) **WELLENVERRIEGELUNG**
SHAFT LOCK
VERROUILLAGE D'ARBRE

(30) Priorität: 11.11.2019 DE 102019217384
(43) Veröffentlichungstag der Anmeldung: 21.09.2022
(73) Patentinhaber: SKF Marine GmbH, 20457 Hamburg (DE)
(72) Erfinder: BARGENDE, Dirk, 25336 Elmshorn (DE)
(74) Vertreter: Kuhstrebe, Jochen
(86) Internationale Anmeldenummer: PCT/EP2020/081490
(87) Internationale Veröffentlichungsnummer: WO 2021/094254

(56) Entgegenhaltungen:
- WO-A1-2018/144185
- CN-A- 101 639 103
- US-A- 4 102 154

## Beschreibung

Die Erfindung betrifft eine Wellenverriegelung mit einem radial innenliegenden Rotorteil, das zentrisch mit einer eine Drehachse aufweisenden Welle verbunden ist, wobei die Welle und das radial innenliegende Rotorteil zumindest teilweise koaxial von einem feststehenden sowie radial außenliegenden Statorteil umschlossen sind.

Aus dem Stand der Technik sind Verriegelungen in einer großen Variationsbreite bekannt, um eine Drehbewegung einer Welle erforderlichenfalls zu blockieren und im Bedarfsfall wieder freizugeben. Hierbei findet beispielsweise eine mechanische Verriegelung mittels zusätzlicher hydraulischer Verriegelungszylinder Verwendung. Weiterhin sind kraftschlüssige bzw. reibschlüssige Drehverriegelungen mittels ausfahrbarer Gewindestangen und Bremsscheiben bekannt. Darüber hinaus kommen formschlüssige Drehverriegelungen mittels Steckbolzen, ausfahrbaren Keilen, Riegeln, Stiften sowie Verzahnungen zum Einsatz. Weiterhin sind Drehverriegelungen einer Welle mit Hilfe von selbsthemmenden Getrieben, wie zum Beispiel Schraubengetrieben, bekannt.

Druckschriftlicher Stand der Technik ist aus der US 4 102 154 A bekannt. Diese Druckschrift zeigt eine Wellenverriegelung mit einem radial inneren Rotorteil, das zentrisch mit einer Welle verbunden werden kann. Das innere Rotorteil ist von einem äußeren Statorteil umgriffen. Mittels Verriegelungskörpern kann ein Formschluss zwischen dem Rotorteil und dem Statorteil hergestellt werden. Weiterer druckschriftlicher Stand der Technik ist in der WO 2018/144185 A1 und in der CN 101 639 103 A gezeigt.

Eine Aufgabe der Erfindung ist es unter anderem, eine konstruktiv einfach aufgebaute, räumlich kompakte Wellenverriegelung unter weitgehender Verwendung von Standard-Maschinenbauelementen anzugeben, die eine Übertragung hoher mechanischer Momente bei einem minimalen Drehspiel ermöglicht.

Die eingangs genannte Aufgabe wird gelöst durch eine Wellenverriegelung mit den Merkmalen des Patentanspruchs 1, insbesondere dadurch, dass in einem Verriegelungszustand und in einem Haltezustand eine formschlüssige Verbindung mittels einer Mehrzahl von Verriegelungskörpern zwischen dem radial innenliegenden Rotorteil und dem feststehenden sowie radial außenliegenden Statorteil herstellbar ist und die formschlüssige Verbindung zum Übergang in einen Entriegelungszustand aufhebbar ist.

Die Verriegelungskörper sind mittels mindestens eines Betätigungsglieds bereichsweise formschlüssig in jeweils eine Aufnahmegeometrie des radial innenliegenden Rotorteils zum Herstellen oder Aufheben der formschlüssigen Verbindung teilweise einrückbar. Infolgedessen ist eine Formschlussverbindung zwischen dem Rotorteil, den Verrieglungskörpern und dem Statorteil herstellbar und gegebenenfalls wieder lösbar. Im Fall von beispielhaft kugelförmigen Verriegelungskörpern sind die Aufnahmegeometrien als kalottenförmige Vertiefungen und im Fall von exemplarisch zylindrischen bzw. walzenförmigen Verriegelungskörpern als axiale Längsnuten ausgeführt. Sowohl die kalottenförmigen Vertiefungen als auch die Längsnuten weisen jeweils eine im Wesentlichen kreisabschnittförmige Querschnittsgeometrie auf, in die die Verriegelungskörper höchstens hälftig formschlüssig einrückbar sind.

Das mindestens eine Betätigungsglied ist als ein im Wesentlichen hohlzylindrischer Verriegelungsring ausgebildet, der das feststehende sowie radial innenliegende Statorteil teilweise radial außenliegend koaxial umschließt. Hierdurch ist ein besonders platzsparender, robuster sowie kostengünstig zu fertigender Aufbau der Wellenverriegelung gewährleistet.

Infolgedessen sind zumindest das Blockieren bzw. das Verriegeln sowie das erneute Freigeben einer Drehbewegung der Welle möglich. Erforderlichenfalls ist auch eine axiale Verriegelung der Welle realisierbar. Darüber hinaus sind mittels der kompakten und robusten Wellenverriegelung hohe Drehmomente bei einem geringen Einbauraumbedarf übertragbar. Durch die Formschlussverbindung besteht keinerlei Energiebedarf im Haltezustand, im Verriegelungszustand oder im Entriegelungszustand. Der Einsatz von Energie ist lediglich beim Umschalten zwischen den drei Zuständen der Wellenverriegelung vonnöten. Eine Drehwinkelposition des Verriegelungs- bzw. Haltezustands der Wellenverriegelung lässt sich bei der Montage der Zielanwendung frei festlegen. Hierbei lässt sich die Drehwinkelposition in einer sehr feinen, vorab konstruktiv leicht festlegbaren Teilung anpassen. Die erfindungsgemäße Wellenverriegelung ist im Entriegelungszustand kontaktfrei und tolerant gegenüber Schiefstellungen in der Form von Radial- und Winkelversätzen. Ferner entsteht aufgrund der Kontaktfreiheit im Entriegelungszustand keine betriebsbedingte Abwärme. Weiterhin ist ein geringes Verdrehspiel im Halte- und Verriegelungszustand gewährleistet. Die Wellenverriegelung kann dabei mit üblichen Standardelementen des Maschinenbaus kostengünstig gefertigt werden.

Vorzugsweise ist die formschlüssige Verbindung zwischen dem feststehenden sowie radial außenliegenden Statorteil und dem Rotorteil mit der Welle drehfest oder drehfest und schiebefest ausgebildet. Infolgedessen lässt sich die Welle zusätzlich in axialer Richtung in Bezug zu dem radial außenliegenden Statorteil arretieren.

Bei einer technisch vorteilhaften Ausgestaltung sind die Verriegelungskörper vorzugsweise umfangsseitig gleichmäßig verteilt positioniert.

Hierdurch stellt sich eine gleichmäßige Kraft- und Momentenverteilung innerhalb der Wellenverriegelung ein.

Im Fall einer weiteren vorteilhaften Ausgestaltung sind die Verriegelungskörper zylindrisch oder kugelförmig ausgebildet. Infolgedessen lässt sich die Wellenverriegelung flüssig und leichtgängig zwischen dem Entriegelungszustand, dem Verriegelungszustand und dem Haltezustand umschalten. Darüber hinaus stellen oberflächenveredelte Zylinder bzw. Rollen oder Kugeln besonders kostengünstige Standardbauelemente des Maschinenbaus dar.

Bei einer vorteilhaften Formgebung ist vorgesehen, dass die Aufnahmegeometrien des radial innenliegenden Rotorteils jeweils eine Querschnittsform aufweisen, die näherungsweise einem Kreisabschnitt entspricht, dessen Höhe kleiner als ein Radius der Verriegelungskörper ist.

Infolgedessen können sich die Verriegelungskörper beim Wechsel in den Entriegelungszustand wieder leicht vom Rotorteil abheben, da eine Äquatorialebene bzw. eine Mittelebene der Verriegelungskörper oberhalb einer Außenmantelfläche des Rotorteils verläuft. Infolgedessen sind die Verriegelungskörper unter keinen Umständen mehr als hälftig in die jeweils zugeordnete Aufnahmegeometrie des Rotorteils einrückbar.

Bei einer technisch günstigen Weiterbildung weist das feststehende sowie radial innenliegende Statorteil eine Mehrzahl von radial durchgehenden Durchbrüchen auf, wobei in jedem Durchbruch jeweils ein Verriegelungskörper bereichsweise formschlüssig aufgenommen ist. Infolgedessen lassen sich die Verriegelungskörper mittels des Verriegelungsrings von außen mit Hilfe des Verriegelungsrings betätigen und somit radial einwärts gerichtet einrücken.

Nach Maßgabe einer weiteren vorteilhaften Ausgestaltung weist eine zylindrische Innenfläche des Verriegelungsrings eine Mehrzahl von radial einwärts gerichteten Aufnahmetaschen für jeweils einen Verriegelungskörper auf, wobei jede Aufnahmetasche eine radial einwärts geneigte Anlaufschräge aufweist.

Hierdurch ist eine radial einwärts gerichtete Verschiebebewegung der Verriegelungskörper mit einer hohen axialen Kraftwirkung durch das Verdrehen des Verriegelungsrings realisierbar.

Vorzugsweise schließt an jede Anlaufschräge ein vertiefter, hohlkehlartiger Endabschnitt an, in dessen Bereich ein Halteelement, insbesondere ein Permanentmagnet, zur Lagefixierung eines Verriegelungskörpers innerhalb einer jeweils zugeordneten Aufnahmetasche des Verriegelungsrings in dem Entriegelungszustand angeordnet ist. Hierdurch sind im Entriegelungszustand der Wellenverriegelung eine zuverlässige Lagesicherung und eine definierte Lage der Verriegelungskörper gewährleistet.

Bei einer vorteilhaften Weiterbildung ist vorgesehen, dass jede Anlaufschräge einen umfangsseitig von dem vertieften hohlkehlartigen Endabschnitt weggerichteten weiteren Endabschnitt aufweist, an den umfangsseitig eine konzentrisch zur Drehachse ausgeführte Haltefläche anschließt.

Aufgrund der im Wesentlichen tangential in Bezug zur Innenfläche des Verriegelungsrings verlaufenden Halteflächen der Anlaufschrägen ist eine umfangsseitige Verschiebung der Verriegelungskörper ausgeschlossen, so dass sich die Wellenverriegelung nicht unbeabsichtigt lösen kann.

Bevorzugt ist jeder Verriegelungskörper im Entriegelungszustand der Wellenverriegelung jeweils von einem Halteelement in dem jeweils zugeordneten vertieften hohlkehlartigen Endabschnitt der Anlaufschräge gehalten, so dass die Aufnahmegeometrien des Rotorteils frei von Verriegelungskörpern sind und die Verriegelungskörper soweit radial außen liegen, dass sie höchstens bündig mit einer zylindrischen Innenfläche des Statorteils abschließen und sich das Rotorteil zusammen mit der Welle frei in Relation zum Statorteil drehen kann. Hierdurch ist die mechanische Kontaktfreiheit bzw. die Reibungsfreiheit zwischen dem Rotorteil und dem Statorteil im Entriegelungszustand der Wellenverriegelung sichergestellt.

Bei einer weiteren Ausgestaltung der Wellenverriegelung ist vorgesehen, dass durch das Verdrehen des Verriegelungsrings in einer Verriegelungsrichtung die Verriegelungskörper mittels der Anlaufschrägen aus den Durchbrüchen des Statorteils radial einwärts verschiebbar sind und hierbei weniger als hälftig in jeweils eine zugeordnete Aufnahmegeometrie des Rotorteils einrückbar sind und der Verriegelungszustand der Wellenverriegelung hergestellt ist, in dem eine Verdrehung des Rotorteils mit der Welle in Relation zum Statorteil blockiert ist.

Hierdurch ist eine robuste und zudem mechanisch hoch belastbare Blockierung einer Drehbewegung der Welle mit dem Rotorteil in Relation zu dem Statorteil gegeben.

Vorzugsweise kommt bei einem weiteren Verdrehen des Verriegelungsrings in der Verriegelungsrichtung jeder Verriegelungskörper zur Anlage an die jeweils zugeordnete Haltefläche der Aufnahmetasche und der Haltezustand der Wellenverriegelung ist erreicht, in dem ein unbeabsichtigtes Lösen der formschlüssigen Verbindung zwischen dem Rotorteil mit der Welle und dem Statorteil ausgeschlossen ist. Hierdurch ist im Haltezustand ein unbeabsichtigtes Lösen der Blockierung der Welle zuverlässig ausgeschlossen.

Im Folgenden wird ein bevorzugtes Ausführungsbeispiel der Erfindung anhand von schematischen Figuren näher erläutert.

Es zeigen
- **Figur 1**: eine teilweise angeschnittene Teildraufsicht einer erfindungsgemäßen Wellenverriegelung in einem Entriegelungszustand,
- **Figur 2**: eine teilweise angeschnittene Teildraufsicht der Wellenverriegelung von Figur 1 in einem Verriegelungszustand,
- **Figur 3**: eine teilweise angeschnittene Teildraufsicht der Wellenverriegelung von Figur 1 in einem Haltezustand,
- **Figur 4**: eine vergrößerte schematische Darstellung einer Querschnittsgeometrie einer Aufnahmegeometrie eines Rotorteils mit einem darin bereichsweise formschlüssig aufgenommenen zylindrischen Verriegelungskörper, und
- **Figur 5**: einen Längsschnitt durch die Wellenverriegelung von Figur 1.

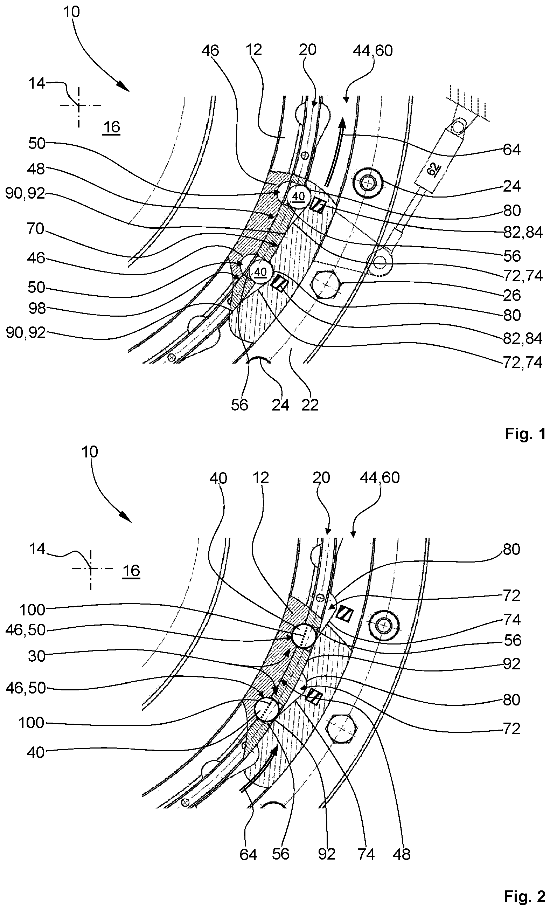

Die **Figur 1** zeigt eine teilweise angeschnittene Teildraufsicht einer erfindungsgemäßen Wellenverriegelung in einem Entriegelungszustand. Eine Wellenverriegelung 10 umfasst zunächst ein radial innenliegendes Rotorteil 12, das zentrisch mit einer eine Drehachse 14 aufweisenden Welle 16 verbunden ist. Die mechanisch hochfeste Verbindung zwischen der Welle 16 und dem Rotorteil 12 der Wellenverriegelung 10 kann zum Beispiel mit Hilfe einer hier nicht dargestellten Schraub-Klemmkupplung, durch thermisches Aufschrumpfen, eine Passfederverbindung oder dergleichen realisiert sein. Das Rotorteil 12 verfügt über eine im Wesentlichen hohlzylindrische Geometrie. Die Welle 16 mit dem darauf befestigten, radial innenliegenden Rotorteil 12 ist zumindest teilweise koaxial von einem feststehenden bzw. ortsfesten sowie radial außenliegenden Statorteil 20 umschlossen. Das eine gleichfalls im Wesentlichen hohlzylindrische Geometrie aufweisende Statorteil 20 weist einen radial auswärts gerichteten bzw. senkrecht zur Drehachse 14 orientierten, kreisringförmigen Befestigungsflansch 22 auf. In den Befestigungsflansch 22 ist eine Vielzahl von bevorzugt umfangsseitig gleichmäßig zueinander beabstandet angeordneten Durchgangsbohrungen 24 für Befestigungsmittel 26, wie Schrauben, Bolzen etc. eingebracht. Durch die Befestigungsmittel 26 ist der Statorteil 20 mit einem nicht dargestellten ortsfesten Widerlager, wie zum Beispiel einer Rumpfstruktur eines Schiffes, einem Getriebeflansch oder dergleichen verbunden.

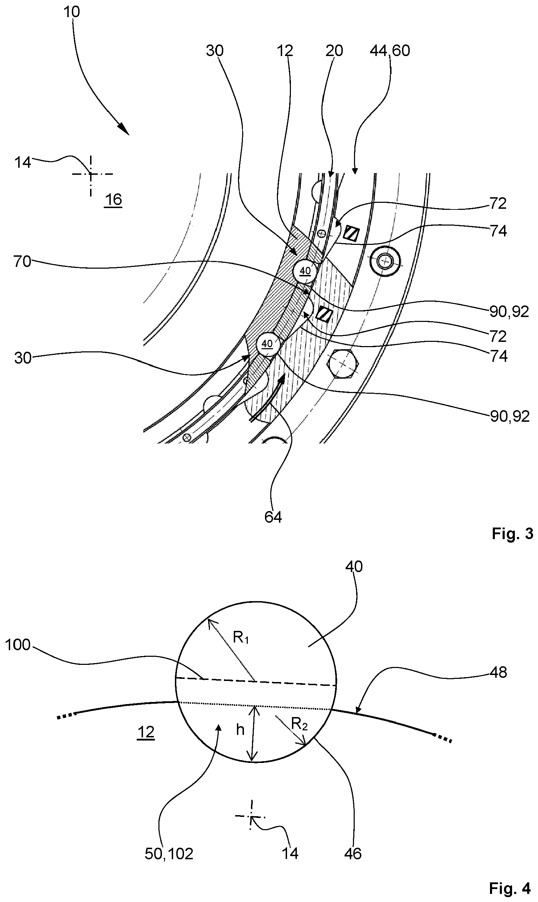

In einem Verriegelungszustand sowie in einem Haltezustand der Wellenverriegelung 10 besteht eine formschlüssige Verbindung (vgl. Figur 2, 3; Bezugsziffer 30) mittels einer Mehrzahl von bevorzugt umfangsseitig gleichmäßig zueinander beabstandet angeordneten Verriegelungskörpern 40 zwischen dem radial innenliegenden Rotorteil 12 und dem feststehenden und radial außen positionierten Statorteil 20. In der Darstellung von der Figur 1 befindet sich die Wellenverriegelung 10 in einem Entriegelungszustand, in dem die formschlüssige Verbindung zwischen dem Rotorteil 12 und dem Statorteil 20 aufgehoben ist und sich die Welle 16 mit dem Rotorteil 12 frei und praktisch widerstandsfrei in Relation zu dem Statorteil 20 verdrehen kann. Die formschlüssige Verbindung zwischen dem feststehenden und dem radial außenliegenden Statorteil 20 und dem Rotorteil 12 kann hierbei drehfest oder auch drehfest und schiebefest ausgebildet sein.

Die konstruktiv identischen Verriegelungskörper 40 sind mittels mindestens eines Betätigungsglieds 44 in jeweils eine zugeordnete periphere Aufnahmegeometrie 46 einer Außenmantelfläche 48 des Rotorteils 12 zum Herstellen oder Aufheben der formschlüssigen Verbindung höchstens teilweise eindrückbar. Die Verriegelungskörper 40 können beispielsweise kugelförmig oder im Wesentlichen zylinder- bzw. walzenförmig oder rollenförmig ausgeführt sein. Die Verriegelungskörper 40 können auch eine vieleckige Querschnittsgeometrie aufweisen und zum Beispiel nach Art von Passfedern ausgebildet sein. In Abhängigkeit von der Formgebung der Verriegelungskörper 40 können die konstruktiv jeweils gleichen Aufnahmegeometrien 46 des Rotorteils 12 beispielsweise als kalottenförmige Vertiefungen oder als Längsnuten in der Außenmantelfläche 48 des Rotorteils 12 ausgeführt sein. In dem hier illustrierten Ausführungsbeispiel der Wellenverriegelung 10 sind die Verriegelungskörper 40 lediglich zylindrisch bzw. walzenförmig ausgestaltet, woraus im Vergleich zu kugelförmigen Verriegelungskörpern eine reduzierte Flächenpressung bei einer Überleitung hoher Drehmomente über die Wellenverriegelung 10 zu erzielen ist. Demzufolge sind die Aufnahmegeometrien 46 hier als parallel zur Drehachse 14 verlaufende, der besseren zeichnerischen Übersicht halber nicht bezeichnete Längsnuten, ausgeführt. In Abhängigkeit davon, ob zusätzlich eine einseitig oder beidseitig axial verschiebefeste Verriegelung der Welle 16 erwünscht ist, können die Längsnuten axial durchgehend bzw. beidseitig offen oder einseitig oder beidseitig geschlossen ausgeführt sein. Zur bereichsweise formschlüssigen Aufnahme weisen die Längsnuten eine Querschnittsgeometrie auf, die im Wesentlichen der eines Kreisabschnitts entspricht bzw. die komplementär zur Querschnittsgeometrie der Verriegelungskörper 40 ausgeführt ist.

Sowohl im Verriegelungszustand als auch im Haltezustand der Wellenverriegelung 10 ist jeweils ein Verriegelungskörper 40 bereichsweise formschlüssig in jeweils einer Aufnahmegeometrie 46 des Rotorteils 12 aufgenommen. Die Aufnahmegeometrien 46 des Rotorteils 12 weisen jeweils eine Querschnittsform 50 auf, die näherungsweise einem hier nicht bezeichneten Kreisabschnitt bzw. Kreissegment entspricht, dessen hier gleichfalls nicht bezeichnete Höhe kleiner als ein hier ebenfalls nicht mit einer Bezugsziffer versehener Radius der Verriegelungskörper 40 ist, so dass sich die Verriegelungskörper 40 aufgrund der dann nicht vorhandenen Hinterschneidung leicht radial auswärts aus den Aufnahmegeometrien 46 herausbewegen lassen (vgl. Figur 4) .

Das Statorteil 20 verfügt über eine Vielzahl von radial durchgehenden, konstruktiv identischen Durchbrüchen 56, die umfangsseitig gleichmäßig zueinander beabstandet angeordnet sind und die - wie hier gezeigt - zumindest für den Übergang vom Entriegelungszustand in den Verriegelungszustand oder Haltezustand umfangsseitig vollständig in Deckung mit den jeweils zugeordneten Aufnahmegeometrien 46 des Rotorteils 12 stehen.

In jedem der Durchbrüche 56 des Statorteils 20 ist jeweils ein Verriegelungskörper 40 zumindest bereichsweise formschlüssig aufgenommen. In Abhängigkeit davon, ob die Verriegelungskörper 40 kugelförmig oder zylinderförmig ausgestaltet sind, sind die Durchbrüche 56 als radial durchgehende Bohrungen oder als parallel zur Drehachse 14 verlaufende Langlöcher bzw. Längsschlitze ausgeführt.

Das Betätigungsglied 44 ist hier lediglich beispielhaft mit einem im Wesentlichen hohlzylindrischen Verriegelungsring 60 gebildet, der das feststehende und radial innenliegende Statorteil 20 teilweise radial außenliegend koaxial umschließt. Zum Wechsel von dem in Figur 1 gezeigten Entriegelungszustand in den Verriegelungszustand oder in den Haltezustand der Wellenverriegelung 10 (vgl. Figuren 2, 3), ist der Verriegelungsring 60 mittels eines geeigneten, zeichnerisch lediglich angedeuteten Aktors 62 in einer Verriegelungsrichtung 64 verdrehbar. Durch das Verdrehen des Verriegelungsrings 60 in einer der Verriegelungsrichtung 64 entgegengesetzt orientierten, nicht eingezeichneten Entriegelungsrichtung, erfolgt im Bedarfsfall der Wechsel aus dem Haltezustand in den Entriegelungszustand.

In eine zylindrische Innenfläche 70 des Verriegelungsrings 60 ist eine Vielzahl von radial einwärts gerichteten, konstruktiv jeweils gleichartigen Aufnahmetaschen 72 für jeweils einen Verriegelungskörper 40 eingelassen, wobei jede Aufnahmetasche 72 eine radial einwärts gerichtete Anlaufschräge 74 aufweist. Jede Anlaufschräge 74 verfügt über einen vertieften, hohlkehlartigen Endabschnitt 80, in dem im hier gezeigten Entriegelungszustand der Wellenverriegelung 10 jeweils ein Verriegelungskörper 40 bereichsweise anliegt. Um die Verriegelungskörper 40 im Entriegelungszustand zuverlässig in dem ihnen jeweils zugeordneten hohlkehlartigen Endabschnitt 80 zu halten, ist im Bereich eines jeden hohlkehlartigen Endabschnitts 80 jeweils ein Halteelement 82 vorgesehen. Dasselbe gilt für alle weiteren nicht dargestellten hohlkehlartigen Endabschnitte der übrigen Aufnahmetaschen. Die Halteelemente 82 sind bevorzugt jeweils mit einem Permanentmagneten 84 realisiert. Alternativ können auch mechanische Halteelemente, wie zum Beispiel Halteklammern etc. vorgesehen sein. Jede Anlaufschräge 74 weist ferner einen umfangsseitig, von dem jeweils zugeordneten, hohlkehlartig vertieften Endabschnitt 80 weggerichteten weiteren Endabschnitt 90 auf, an den sich umfangseitig jeweils eine konzentrisch zu der Drehachse 14 ausgeführte Haltefläche 92 anschließt.

Die Halteflächen 92 verlaufen hier lediglich exemplarisch im Wesentlichen tangential zu der - bis auf die Aufnahmetaschen - näherungsweise zylindrischen Innenfläche 70 des Verriegelungsrings 60. Die Halteflächen 92 können gegebenenfalls auch coradial, also zylindrisch in Bezug zu der Innenfläche 70 des Verriegelungsrings 60 ausgebildet sein.

Jeder Verriegelungskörper 40 ist in dem hier illustrierten Entriegelungszustand der Wellenverriegelung 10 jeweils von einem zugeordneten Halteelement 82 in dem jeweils zugeordneten, vertieften hohlkehlartigen Endabschnitt 80 der betreffenden Anlaufschräge 74 zuverlässig gehalten. Infolgedessen sind die Aufnahmegeometrien 46 des Rotorteils 12 frei von Verriegelungskörpern 40 und diese liegen soweit radial außen, dass sie höchstens bündig mit einer zylindrischen Innenfläche 98 des Statorteils 20 abschließen bzw. innenseitig nicht über diese hinausragen, sodass sich das Rotorteil 12 zusammen mit der daran befestigten Welle 16 im Entriegelungszustand praktisch reibungsfrei in Relation zum Statorteil 20 drehen kann.

Die **Figur 2** illustriert eine teilweise angeschnittene Teildraufsicht der Wellenverriegelung von Figur 1 in einem Verriegelungszustand. Die Wellenverriegelung 10 umfasst wiederum das Rotorteil 12, das Statorteil 20 sowie das als Verriegelungsring 60 ausgebildete Betätigungsglied 44, die konzentrisch zur Drehachse 14 der Welle 16 angeordnet sind. Der Aktor von Figur 1 ist der besseren zeichnerischen Übersicht hier und in allen weiteren Figuren nicht mehr dargestellt. Durch das Verdrehen des Verriegelungsrings 60 in Richtung der Verriegelungsrichtung 64 haben sich die Verriegelungskörper 40 aus den hohlkehlartigen Endabschnitten 80 der Aufnahmetaschen 72 des Verriegelungsrings 60 herausbewegt und sind auf den Anlaufschrägen 74 umfangsseitig bis an die Halteflächen 92 heran gelaufen. Aufgrund der radial einwärts gerichteten Neigung der Anlaufschrägen 74 erfolgt eine in Bezug zu der Drehachse 14 radial einwärts gerichtete Verschiebebewegung der Verriegelungskörper 40, sodass diese teilweise aus den Durchbrüchen 56 des Statorteils 20 heraus geschoben und in die jeweils zugeordnete Aufnahmegeometrie 46 des Rotorteils 12 eingerückt werden, wodurch die formschlüssige Verbindung 30 zwischen dem Rotorteil 12 und dem Statorteil 20 geschaffen wird.

Eine Äquatorialebene 100 der Verriegelungskörper 40 verbleibt stets radial außerhalb bzw. radial oberhalb der Außenmantelfläche 48 des Rotorteils 12, so dass sich die Verriegelungskörper 40 bei einem Wechsel in den Entriegelungszustand von Figur 1 leicht aus den Aufnahmegeometrien 46 des Rotorteils 12 herausbewegen können. Dies wird dadurch erreicht, dass die Querschnittsform 50 der Aufnahmegeometrien 46 jeweils kleiner als ein Halbkreis ist bzw. die Form eines Kreisabschnitts aufweist.

Durch das Verdrehen des Verriegelungsrings 60 in der Verriegelungsrichtung 64 sind die Verriegelungskörper 40 mithilfe der Anlaufschrägen 74 aus den Durchbrüchen 56 des Statorteils 20 in Bezug zur Drehachse 14 radial einwärts verschiebbar, so dass die Verriegelungskörper 40 weniger als hälftig in jeweils einer zugeordneten Aufnahmegeometrie 46 des Rotorteils 12 eingerückt unter Schaffung der formschlüssigen Verbindung 30 sind und der Verriegelungszustand der Wellenverriegelung 10 erreicht ist. In dem Verriegelungszustand ist jede Verdrehung des Rotorteils 12 mit der Welle 16 in Relation zum Statorteil 20 auch beim Einwirken hoher und höchster Drehmomente zuverlässig blockiert.

Die **Figur** 3 zeigt eine teilweise angeschnittene Teildraufsicht der Wellenverriegelung von Figur 1 in einem Haltezustand.

Die rotationssymmetrisch zur Drehachse 14 aufgebaute Wellenverriegelung 10 umfasst wiederum die Welle 16 mit dem darauf befestigten Rotorteil 12, das Statorteil 20 sowie das als Verriegelungsring 60 ausgeführte Betätigungsglied 44. Durch das Weiterdrehen des Verriegelungsrings 60 ausgehend von dem Verriegelungszustand in Figur 2 in der Orientierung der Verriegelungsrichtung 64 gleiten die Verriegelungskörper 40 bis auf die Halteflächen 92 des weiteren Endabschnitts 90 der Anlaufschrägen 74 der Aufnahmetaschen 72 des Verriegelungsrings auf. Durch die im Wesentlichen koaxial zu der Drehachse 14 verlaufenden Halteflächen 92, der - bis auf die Aufnahmetaschen 72 - im Wesentlichen zylindrischen Innenfläche 70 des Verriegelungsrings 60, ist ein unbeabsichtigtes Umschalten der Wellenverriegelung 10 aus dem Haltezustand in den Verriegelungs- oder den Entriegelungszustand ausgeschlossen. Zusätzlich können die Halteflächen 92 jeweils mit einer zeichnerisch nicht dargestellten kleinen muldenartigen Vertiefung und/oder einer geringfügigen wulstartigen Aufdickung versehen sein, die eine Zurückbewegung der Verriegelungskörper 40 bis in den Bereich der jeweils zugeordneten Anlaufschräge 74 der Aufnahmetasche 72 ohne aktive Betätigung des Verriegelungsrings 60 verhindern, sodass eine selbsttätige Entriegelung der Wellenverriegelung 10 zuverlässig ausgeschlossen ist. Aufgrund optionaler Aufdickungen oder Vertiefungen vergrößert sich jedoch in der Regel das Spiel der Verriegelungskörper 40 und als Folge hiervon ein Verdrehspiel der verriegelten Welle 16.

Die Formschlussverbindung 30 zwischen dem Rotorteil 12 und dem Statorteil 20 bleibt im hier gezeigten Haltezustand der Wellenverriegelung 10 bis zum Verdrehen des Verriegelungsrings 60 entgegen der Verriegelungsrichtung 64 unverändert bestehen.

Durch eine Drehbewegung des Verriegelungsrings 60 entgegen der Verriegelungsrichtung 64, kann die Wellenverriegelung ausgehend von dem hier illustrierten Haltezustand im Bedarfsfall wiederum in den Verriegelungszustand von Figur 2 und durch Weiterdrehen in den Entriegelungszustand von Figur 1 zurückversetzt werden. Zum Lösen der Verriegelungskörper 40 aus den diesen jeweils zugeordneten Aufnahmegeometrien 46 des Rotors 12, kann eine geringfügige und kurzzeitig anruckende Drehbewegung entgegen oder in Richtung der Orientierung der Verriegelungsrichtung 64 zwischen dem Rotorteil 12 und dem Statorteil 20 erforderlich sein. Zum Lösen der Verriegelungskörper 40 muss der Verriegelungsring 60 grundsätzlich entgegen der Verriegelungsrichtung 64 bis in die Stellung von Figur 1 verdreht bzw. "geöffnet" sein, so dass sich die Wellenverriegelung 10 wiederum im Entriegelungszustand befindet.

Die **Figur 4** zeigt eine vergrößerte schematische Querschnittsdarstellung einer Aufnahmegeometrie eines Rotorteils mit einem darin bereichsweise formschlüssig aufgenommenen zylindrischen Verriegelungskörper.

In das Rotorteil 12 ist eine Vielzahl von Aufnahmegeometrien für die Verriegelungskörper ausgebildet, von denen hier lediglich ein bereichsweise formschlüssig in der Aufnahmegeometrie 46 aufgenommener Verriegelungskörper 40 stellvertretend für alle weiteren Verriegelungskörper und Aufnahmegeometrien dargestellt ist. Der Verriegelungskörper 40 weist eine im Wesentlichen zylindrische Formgebung mit einem Radius R₁ auf, wobei der Radius R₁ mit einem Radius R₂ der kalottenförmigen Aufnahmegeometrie 46 zur Gewährleistung der bereichsweisen Formschlüssigkeit korrespondiert. Die Aufnahmegeometrie 46 verfügt über eine Querschnittsform 50, die näherungsweise der eines Kreisabschnitts 102 bzw. der eines Kreissegments mit einer Höhe h entspricht. Die Äquatorialebene 100 bzw. die Mittelebene des Verriegelungskörpers 40 verläuft oberhalb bzw. radial auswärts in Bezug zu der Außenmantelfläche 48 des Rotorteils 12 bzw. der Drehachse 14, so dass der Verriegelungskörper 40 in jedem Fall weniger als zur Hälfte formschlüssig in der Aufnahmegeometrie 46 des Rotorteils 12 aufgenommen ist. Entsprechende Überlegungen gelten für den Fall, dass der Verriegelungskörper 40 kugelförmig ausgeführt ist.

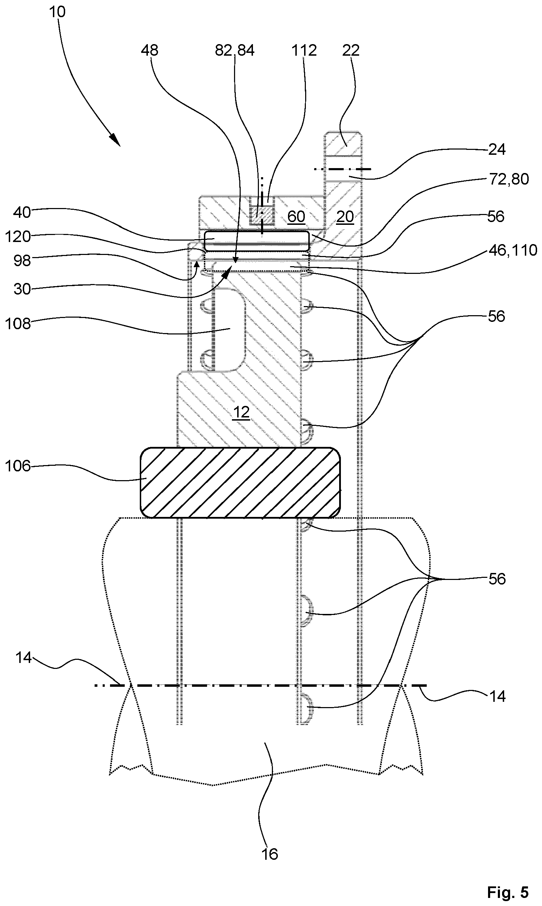

Die **Figur 5** zeigt einen Längsschnitt durch die Wellenverriegelung von Fig. 1.

Das hohlzylindrische Rotorteil 12 der Wellenverriegelung 10 ist mittels einer zeichnerisch lediglich angedeuteten Schraub-Klemmkupplung 106 dreh- und schiebefest mit der die Drehachse 14 aufweisenden Welle 16 verbunden. Das Rotorteil 12 verfügt über eine umlaufende Ringnut 108 mit einer näherungsweise wannenförmigen Querschnittsgeometrie zur Gewichtseinsparung. An der Außenmantelfläche 48 des Rotorteils 12 sind die Aufnahmegeometrien ausgebildet, von denen hier lediglich eine Aufnahmegeometrie 46 dargestellt ist. In dem hier dargestellten Ausführungsbeispiel ist die Aufnahmegeometrie 46 mit einer beidseitig offenen bzw. axial durchgehenden Längsnut 110 gebildet, sodass die Wellenverriegelung 10 nur das drehfeste Arretieren der Welle 16 mit dem Rotorteil 12 innerhalb des radial außenliegenden Statorteils 20 ermöglicht, wohingegen eine verschiebefeste Blockierung der Welle 16 nicht vorgesehen ist. Das Statorteil 20 verfügt ferner über den radial auswärts gerichteten Befestigungsflansch 22 mit einer Vielzahl von parallel zur Drehachse 16 verlaufenden sowie umfangsseitig gleichmäßig zueinander beabstandeten Bohrungen, von denen lediglich eine Bohrung 24 zur mechanischen Anbindung der Wellenverriegelung 10 an ein nicht dargestelltes Widerlager repräsentativ für alle übrigen dargestellt und bezeichnet ist. Das als Permanentmagnet 84 ausgebildete Halteelement 82 ist in einer im Wesentlichen radial einwärts gerichteten Sackbohrung 112 innerhalb des Verriegelungsrings 60 befestigt. Entsprechend weist der Verriegelungsring 60 für jeden weiteren hier nicht dargestellten Verriegelungskörper einen weiteren Permanentmagneten als Halteelement auf. In dem hier veranschaulichten Entriegelungszustand der Wellenverriegelung 10 wird der mit einer durchgezogenen schwarzen Linie dargestellte, im Wesentlichen zylinderförmige Verriegelungskörper 40 von dem Permanentmagneten 84 angezogen und ist hierdurch sicher innerhalb der zugeordneten Aufnahmetasche 72 lagefixiert. Der Verriegelungskörper 40 liegt an dem hohlkehlartigen Endabschnitt 80 der Aufnahmetasche 72 an, so dass der Verriegelungskörper 40 nur teilweise in dem Durchbruch 56 des Statorteils 20 aufgenommen ist und die Aufnahmegeometrie 46 vollkommen frei von dem Verriegelungskörper 40 ist. Der Verriegelungskörper 40 liegt radial auswärts in Bezug zur zylindrischen Innenfläche 98 des Statorteils 20, sodass sich der Rotorteil 12 praktisch widerstandsfrei in Relation zu dem ortsfesten Statorteil 20 verdrehen kann. Die Durchbrüche 56 weisen hier eine näherungsweise ovale Langlochgeometrie auf, da die Verriegelungskörper eine im Wesentlichen zylindrische Formgebung aufweisen, so dass sich die Verriegelungskörper innerhalb der Durchbrüche des Statorteils 20 im Wesentlichen nur radial einwärts und auswärts in Bezug zu der Drehachse 14 verschieben können. Axiale Bewegungen, Scherbewegungen und/oder Kippbewegungen der Verriegelungskörper in Bezug zum Statorteil 20 sind aufgrund der Führung in den Durchbrüchen des Statorteils 20 im Wesentlichen ausgeschlossen.

Wird der Verriegelungskörper 40 durch das Verdrehen des Verriegelungsrings 60 radial einwärts - wie mit der schwarzen punktierten Umrissdarstellung 120 zeichnerisch angedeutet ist - verschoben, so rückt dieser teilweise in die Aufnahmegeometrie 46 des Rotorteils 12 ein und die gewünschte formschlüssige Verbindung 30 zwischen dem Statorteil 20 sowie dem Rotorteil 12 der Welle 16 ist hergestellt und die Wellenverriegelung 10 hat den Verriegelungszustand eingenommen.

Durch das zumindest geringfügige Weiterdrehen des Verriegelungsring 60 in der gleichen Richtung wird die Wellenverriegelung 10 ausgehend von dem Verriegelungszustand weiter in den Haltezustand versetzt.

### Bezugszeichenliste

- 10: Wellenverriegelung
- 12: Rotorteil
- 14: Drehachse
- 16: Welle

- 20: Statorteil
- 22: Befestigungsflansch
- 24: Durchgangsbohrung
- 26: Befestigungsmittel

- 30: formschlüssige Verbindung

- 40: Verriegelungskörper

- 44: Betätigungsglied
- 46: Aufnahmegeometrie (Rotorteil)
- 48: Außenmantelfläche (Rotorteil)
- 50: Querschnittsform (Aufnahmegeometrie Rotorteil)

- 56: Durchbruch (Statorteil)

- 60: Verriegelungsring
- 62: Aktor
- 64: Verriegelungsrichtung

- 70: zylindrische Innenfläche (Verriegelungsring)
- 72: Aufnahmetasche
- 74: Anlaufschräge

- 80: hohlkehlartiger Endabschnitt (Anlaufschräge)
- 82: Halteelement
- 84: Permanentmagnet

- 90: weiterer Endabschnitt (Anlaufschräge)
- 92: Haltefläche

- 98: zylindrische Innenfläche (Statorteil)
- 100: Äquatorialebene (Mittelebene Verriegelungskörper)
- 102: Kreisabschnitt

- 106: Schraub-Klemmkupplung
- 108: Ringnut
- 110: Längsnut (Rotorteil)
- 112: Sackbohrung

- 120: Umrissdarstellung (Verriegelungskörper)

- R₁: Radius (Verriegelungskörper)
- R₂: Radius (Aufnahmegeometrie Rotorteil)
- h: Höhe (Kreisabschnitt Aufnahmegeometrie)

## Patentansprüche

1. Wellenverriegelung (10) mit einem radial innenliegenden Rotorteil (12), das zentrisch mit einer eine Drehachse (14) aufweisenden Welle (16) verbunden ist, wobei die Welle (16) und das radial innenliegende Rotorteil (12) zumindest teilweise koaxial von einem feststehenden sowie radial außenliegenden Statorteil (20) umschlossen sind, wobei in einem Verriegelungszustand und in einem Haltezustand eine formschlüssige Verbindung (30) mittels einer Mehrzahl von Verriegelungskörpern (40) zwischen dem radial innenliegenden Rotorteil (12) und dem feststehenden sowie radial außenliegenden Statorteil (20) herstellbar ist und die formschlüssige Verbindung (30) zum Übergang in einen Entriegelungszustand aufhebbar ist, und wobei die Verriegelungskörper (40) mittels mindestens eines Betätigungsglieds (44) bereichsweise formschlüssig in jeweils eine Aufnahmegeometrie (46) des radial innenliegenden Rotorteils (12) zum Herstellen oder Aufheben der formschlüssigen Verbindung (30) teilweise einrückbar sind, **dadurch gekennzeichnet, dass** das mindestens eine Betätigungsglied (44) als ein im Wesentlichen hohlzylindrischer Verriegelungsring (60) ausgebildet ist, der das feststehende sowie radial innenliegende Statorteil (20) teilweise radial außenliegend koaxial umschließt.

2. Wellenverriegelung (10) nach Patentanspruch 1, **dadurch gekennzeichnet, dass** die formschlüssige Verbindung (30) zwischen dem feststehenden sowie radial außenliegenden Statorteil (20) und dem Rotorteil (12) mit der Welle (16) drehfest oder drehfest und schiebefest ausgebildet ist.

3. Wellenverriegelung (10) nach Patentanspruch 1 oder 2, **dadurch gekennzeichnet, dass** die Verriegelungskörper (40) vorzugsweise umfangsseitig gleichmäßig verteilt positioniert sind.

4. Wellenverriegelung (10) nach Patentanspruch1, 2 oder 3, **dadurch gekennzeichnet, dass** die Verriegelungskörper (40) zylindrisch oder kugelförmig ausgebildet sind

5. Wellenverriegelung (10) nach einem der vorhergehenden Patentansprüche, **dadurch gekennzeichnet, dass** die Aufnahmegeometrien (46) des radial innenliegenden Rotorteils (12) jeweils eine Querschnittsform (50) aufweisen, die näherungsweise einem Kreisabschnitt entspricht, dessen Höhe (h) kleiner als ein Radius (R₁) der Verriegelungskörper (40) ist.

6. Wellenverriegelung (10) nach einem der vorhergehenden Patentansprüche, **dadurch gekennzeichnet, dass** das feststehende sowie radial innenliegende Statorteil (20) eine Mehrzahl von radial durchgehenden Durchbrüchen (56) aufweist, wobei in jedem Durchbruch (56) jeweils ein Verriegelungskörper (40) bereichsweise formschlüssig aufgenommen ist.

7. Wellenverriegelung (10) nach einem der vorhergehenden Patentansprüche, **dadurch gekennzeichnet, dass** eine zylindrische Innenfläche (70) des Verriegelungsrings (60) eine Mehrzahl von radial einwärts gerichteten Aufnahmetaschen (72) für jeweils einen Verriegelungskörper (40) aufweist, wobei jede Aufnahmetasche (72) eine radial einwärts geneigte Anlaufschräge (74) aufweist.

8. Wellenverriegelung (10) nach Patentanspruch 7, **dadurch gekennzeichnet, dass** an jede Anlaufschräge (74) ein vertiefter, hohlkehlartiger Endabschnitt (80) anschließt, in dessen Bereich ein Halteelement (82), insbesondere ein Permanentmagnet (84), zur Lagefixierung eines Verriegelungskörpers (40) innerhalb einer jeweils zugeordneten Aufnahmetasche (72) des Verriegelungsrings (60) in dem Entriegelungszustand angeordnet ist.

9. Wellenverriegelung (10) nach Patentanspruch 7 oder 8, **dadurch gekennzeichnet, dass** jede Anlaufschräge (74) einen umfangsseitig von dem vertieften hohlkehlartigen Endabschnitt (80) weggerichteten weiteren Endabschnitt (90) aufweist, an den umfangsseitig eine konzentrisch zur Drehachse (16) ausgeführte Haltefläche (92) anschließt.

10. Wellenverriegelung (10) nach einem der Patentansprüche 4 bis 11, **dadurch gekennzeichnet, dass** jeder Verriegelungskörper (40) im Entriegelungszustand der Wellenverriegelung (10) jeweils von einem Halteelement (82) in dem jeweils zugeordneten vertieften hohlkehlartigen Endabschnitt (80) der Anlaufschräge (74) gehalten ist, so dass die Aufnahmegeometrien (46) des Rotorteils (12) frei von Verriegelungskörpern (40) sind und die Verriegelungskörper (40) soweit radial außen liegen, dass sie höchstens bündig mit einer zylindrischen Innenfläche (98) des Statorteils (20) abschließen und sich das Rotorteil (12) zusammen mit der Welle (14) frei in Relation zum Statorteil (20) drehen kann.

11. Wellenverriegelung (10) nach einem der vorhergehenden Patentansprüche, **dadurch gekennzeichnet, dass** durch das Verdrehen des Verriegelungsrings (60) in einer Verriegelungsrichtung (64) die Verriegelungskörper (40) mittels der Anlaufschrägen (74) aus den Durchbrüchen (56) des Statorteils (20) radial einwärts verschiebbar sind und hierbei weniger als hälftig in jeweils eine zugeordnete Aufnahmegeometrie (46) des Rotorteils (12) einrückbar sind und der Verriegelungszustand der Wellenverriegelung (10) hergestellt ist, in dem eine Verdrehung des Rotorteils (12) mit der Welle (16) in Relation zum Statorteil (20) blockiert ist.

12. Wellenverriegelung (10) nach einem der vorhergehenden Patentansprüche, **dadurch gekennzeichnet, dass** bei einem weiteren Verdrehen des Verriegelungsrings (60) in der Verriegelungsrichtung (64) jeder Verriegelungskörper (40) zur Anlage an die jeweils zugeordnete Haltefläche (92) der Aufnahmetasche (72) kommt und der Haltezustand der Wellenverriegelung (10) erreicht ist, in dem ein unbeabsichtigtes Lösen der formschlüssigen Verbindung (30) zwischen dem Rotorteil (12) mit der Welle (16) und dem Statorteil (20) ausgeschlossen ist.

## Claims

1. Shaft lock (10) having a radially inner rotor part (12) which is centrically connected to a shaft (16) having a rotation axis (14), wherein the shaft (16) and the radially inner rotor part (12) are at least partially enclosed in a coaxial manner by a stationary and radially outer stator part (20), wherein in a locking state and in a holding state a form-fitting connection (30) between the radially inner rotor part (12) and the stationary and radially outer stator part (20) is able to be established by means of a plurality of locking members (40), and the form-fitting connection (30) is able to be cancelled for transitioning to an unlocking state, and wherein the locking members (40) for establishing or cancelling the form-fitting connection (30) in regions are able to be partially moved in a form-fitting manner into one respective receptacle geometry (46) of the radially inner rotor part (12) by means of at least one activation member (46), **characterized in that** the at least one activation member (44) is designed as a substantially hollow-cylindrical locking ring (60) which radially outside partially encloses the stationary and radially inner stator part (20) in a coaxial manner.

2. Shaft lock (10) according to Claim 1, **characterized in that** the form-fitting connection (30) between the stationary and radially outer stator part (20) and the rotor part (12) with the shaft (16) is designed to be co-rotational, or co-rotational and non-displaceable.

3. Shaft lock (10) according to Claim 1 or 2, **characterized in that** the locking members (40) are preferably positioned so as to be distributed uniformly on the circumference.

4. Shaft lock (10) according to Claim 1, 2 or 3, **characterized in that** the locking members (40) are designed to be cylindrical or spherical.

5. Shaft lock (10) according to one of the preceding claims, **characterized in that** the receptacle geometries (46) of the radially inner rotor part (12) each have a cross-sectional shape (50) which corresponds approximately to a circular segment, the height (h) of the latter being smaller than a radius (R₁) of the locking members (40).

6. Shaft lock (10) according to one of the preceding claims, **characterized in that** the stationary and radially inner stator part (20) has a plurality of radially continuous cut-outs (56), wherein one locking member (40) is received in a form-fitting manner in regions in each cut-out (56).

7. Shaft lock (10) according to one of the preceding claims, **characterized in that** a cylindrical internal face (70) of the locking ring (60) has a plurality of radially inward-directed receptacle pockets (72) for in each case one locking member (40), wherein each receptacle pocket (72) has a radially inwardly inclined ramp (74).

8. Shaft lock (10) according to Claim 7, **characterized in that** each ramp (74) is adjoined by a recessed fillet-type end portion (80), disposed in the region of the latter being a holding element (82), in particular a permanent magnet (84), for positionally fixing a locking member (40) within one respective assigned receptacle pocket (72) of the locking ring (60) in the unlocking state.

9. Shaft lock (10) according to Claim 7 or 8, **characterized in that** each ramp (74) has a further end portion (90) which is directed away from the recessed fillet-type end portion (80) on the circumference, and on the circumference is adjoined by a holding face (92) embodied concentrically with the rotation axis (16).

10. Shaft lock (10) according to one of Claims 4 to 11, **characterized in that** each locking member (40) in the unlocking state of the shaft lock (10) is in each case held in the respective assigned recessed fillet-type end portion (80) of the ramp (74) by one holding element (82) in such a way that the receptacle geometries (46) of the rotor part (12) are free from locking elements (40), and the locking members (40) lie so far radially outside that they terminate so as to be at most flush with a cylindrical internal face (98) of the stator part (20), and the rotor part (12) can co-rotate with the shaft (14) freely in relation to the stator part (20) .

11. Shaft lock (10) according to one of the preceding claims, **characterized in that,** by twisting the locking ring (60) in a locking direction (64), the locking members (40) by means of the ramps (74) are displaceable radially inwards from the cut-outs (56) of the stator part (20), and in the process are able to be moved less than halfway into one respective assigned receptacle geometry (46) of the rotor part (12), and the locking state of the shaft lock (10) is established **in that** twisting of the rotor part (12) with the shaft (16) in relation to the stator part (20) is blocked.

12. Shaft lock (10) according to one of the preceding claims, **characterized in that,** when twisting the locking ring (60) further in the locking direction (64), each of the locking members (40) comes to bear on the respective assigned holding face (92) of the receptacle pocket (72), and the holding state of the shaft lock (10) is achieved **in that** unintentional releasing of the form-fitting connection (30) between the rotor part (12) with the shaft (16) and the stator part (20) is precluded.

## Revendications

1. Verrouillage d'arbre (10) avec une partie de rotor (12) située radialement à l'intérieur, qui est reliée de manière centrée à un arbre (16) présentant un axe de rotation (14), l'arbre (16) et la partie de rotor (12) située radialement à l'intérieur étant entourés au moins partiellement coaxialement par une partie de stator (20) fixe et située radialement à l'extérieur ; dans un état de verrouillage et dans un état de maintien, une liaison par complémentarité de forme (30) pouvant être établie au moyen d'une pluralité de corps de verrouillage (40) entre la partie de rotor (12) située radialement à l'intérieur et la partie de stator (20) fixe et située radialement à l'extérieur, et la liaison par complémentarité de forme (30) pouvant être supprimée pour passer à un état de déverrouillage, et les corps de verrouillage (40) pouvant être partiellement engagés par zones par complémentarité de forme, au moyen d'au moins un organe d'actionnement (44), dans une géométrie de réception (46) respective de la partie de rotor (12) située radialement à l'intérieur, pour établir ou supprimer la liaison par complémentarité de forme (30), **caractérisé en ce que** l'au moins un organe d'actionnement (44) est réalisé sous la forme d'une bague de verrouillage (60) essentiellement cylindrique creuse, qui entoure coaxialement la partie de stator (20) fixe et située radialement à l'intérieur, en partie radialement à l'extérieur.

2. Verrouillage d'arbre (10) selon la revendication 1, **caractérisé en ce que** la liaison par complémentarité de forme (30) entre la partie de stator (20) fixe et située radialement à l'extérieur et la partie de rotor (12) avec l'arbre (16) est réalisée sous forme solidaire en rotation ou solidaire en rotation et solidaire en coulissement.

3. Verrouillage d'arbre (10) selon la revendication 1 ou 2, **caractérisé en ce que** les corps de verrouillage (40) sont positionnés de préférence de manière uniformément répartie sur la circonférence.

4. Verrouillage d'arbre (10) selon la revendication 1, 2 ou 3, **caractérisé en ce que** les corps de verrouillage (40) sont réalisés sous forme cylindrique ou sphérique.

5. Verrouillage d'arbre (10) selon l'une quelconque des revendications précédentes, **caractérisé en ce que** les géométries de réception (46) de la partie de rotor (12) située radialement à l'intérieur présentent chacune une forme de section transversale (50) qui correspond approximativement à un segment de cercle dont la hauteur (h) est inférieure à un rayon (R₁) des corps de verrouillage (40).

6. Verrouillage d'arbre (10) selon l'une quelconque des revendications précédentes, **caractérisé en ce que** la partie de stator (20) fixe et située radialement à l'intérieur présente une pluralité d'ajours (56) continus radialement, un corps de verrouillage (40) étant respectivement reçu par zones par complémentarité de forme dans chaque ajour (56).

7. Verrouillage d'arbre (10) selon l'une quelconque des revendications précédentes, **caractérisé en ce qu'**une surface intérieure cylindrique (70) de la bague de verrouillage (60) présente une pluralité de poches de réception (72) orientées radialement vers l'intérieur pour un corps de verrouillage (40) respectif, chaque poche de réception (72) présentant un chanfrein d'approche (74) incliné radialement vers l'intérieur.

8. Verrouillage d'arbre (10) selon la revendication 7, **caractérisé en ce que** chaque chanfrein d'approche (74) est suivi d'une section d'extrémité (80) creusée en forme de gorge, dans la zone de laquelle est agencé un élément de maintien (82), notamment un aimant permanent (84), pour la fixation en position d'un corps de verrouillage (40) à l'intérieur d'une poche de réception (72) respectivement associée de la bague de verrouillage (60) dans l'état de déverrouillage.

9. Verrouillage d'arbre (10) selon la revendication 7 ou 8, **caractérisé en ce que** chaque chanfrein d'approche (74) présente une autre section d'extrémité (90) orientée à l'opposé de la section d'extrémité (80) creusée en forme de gorge sur la circonférence, qui est suivie sur la circonférence d'une surface de maintien (92) conçue concentriquement par rapport à l'axe de rotation (16).

10. Verrouillage d'arbre (10) selon l'une quelconque des revendications 4 à 11, **caractérisé en ce que** chaque corps de verrouillage (40) est maintenu, à l'état de déverrouillage du verrouillage d'arbre (10), par un élément de maintien (82) respectif dans la section d'extrémité (80) creusée en forme de gorge du chanfrein d'approche (74) respectivement associée, de telle sorte que les géométries de réception (46) de la partie de rotor (12) sont exemptes de corps de verrouillage (40) et les corps de verrouillage (40) sont situés radialement à l'extérieur jusqu'à ce qu'ils se terminent au plus à fleur d'une surface intérieure cylindrique (98) de la partie de stator (20) et que la partie de rotor (12) puisse tourner librement conjointement avec l'arbre (14) par rapport à la partie de stator (20).

11. Verrouillage d'arbre (10) selon l'une quelconque des revendications précédentes, **caractérisé en ce que,** par la rotation de la bague de verrouillage (60) dans une direction de verrouillage (64), les corps de verrouillage (40) peuvent être déplacés radialement vers l'intérieur hors des ajours (56) de la partie de stator (20) au moyen des chanfreins d'approche (74) et peuvent ainsi être engagés pour moins de la moitié dans une géométrie de réception (46) associée de la partie de rotor (12) et l'état de verrouillage du verrouillage d'arbre (10) est établi, dans lequel une rotation de la partie de rotor (12) avec l'arbre (16) par rapport à la partie de stator (20) est bloquée.

12. Verrouillage d'arbre (10) selon l'une quelconque des revendications précédentes, **caractérisé en ce que,** lors d'une rotation supplémentaire de la bague de verrouillage (60) dans la direction de verrouillage (64), chaque corps de verrouillage (40) vient s'appliquer contre la surface de maintien (92) respectivement associée de la poche de réception (72) et l'état de maintien du verrouillage d'arbre (10) est atteint, dans lequel un détachement involontaire de la liaison par complémentarité de forme (30) entre la partie de rotor (12) avec l'arbre (16) et la partie de stator (20) est exclu.
